# EUROPEAN PATENT APPLICATION

(11) **EP 4 427 934 A1**
(43) Date of publication of application: **11.09.2024**
(21) Application number: 22887179.4
(22) Date of filing: 28.10.2022
(51) Int. Cl.: B32B 27/18, B32B 27/30, B32B 27/36, B60K 35/00, F21V 3/06

(54) **TRANSLUCENT RESIN SHEET, PROJECTION DISPLAY, AND MOVING BODY**

(30) Priority: 01.11.2021 JP 2021179050
(71) Applicant: Sumitomo Bakelite Co.Ltd., Shinagawa-ku Tokyo 140-0002 (JP)
(72) Inventor: KUSANO, Hiroki, Tokyo 140-0002 (JP); MIYAZAWA, Koshi, Tokyo 140-0002 (JP)
(74) Representative: Müller-Boré & Partner Patentanwälte PartG mbB
(86) International application number: PCT/JP2022/040408
(87) International publication number: WO 2023/074854

(57) **Abstract**

A translucent resin sheet of the present invention is used as a cover member 1 installed to cover a window portion of a storage body which stores a light source emitting light and includes the window portion, through which the light from the light source is emitted toward an outside. The translucent resin sheet (the cover member 1) includes a resin layer 3 configured with a resin material as a main material, and a coating layer 5 laminated on at least one surface of the resin layer 3, the coating layer 5 contains a curable resin and an ultraviolet absorber, and it is satisfied that a color change of the translucent resin sheet measured based on ISO11664-4 after irradiating the coating layer 5 with ultraviolet rays for 600 hours using a xenon weather meter based on Table 3-A method-Cycle No. 3 in JIS K 7350-2 is less than 5.0 [ΔE].

## Description

### Technical Field

The present invention relates to a translucent resin sheet, a projection type display, and a moving body.

### Background Art

In recent years, a head-up display device has been known as a projection type display used as being mounted on a moving body such as an automobile (for example, see PTL 1) .

The head-up display device disclosed in PTL 1 is a device which obtains a virtual image by reflecting a display image displayed on a display device (a display unit) such as a liquid crystal display, a CRT, or the like with a mirror, and projecting the display image onto a windshield included in a vehicle as a screen having a curved shape. An emission window for emitting the display image may be provided on a housing which stores the display unit.

It has been proposed that, on this emission window, a cover member (a translucent resin sheet) including a resin layer mainly configured with a resin material, and a coating layer (a hard coating layer) laminated on this resin layer is disposed (mounted) (for example, see PTL 2).

As described above, the head-up display device having such a configuration projects the display image onto the windshield, and is thus disposed directly under the windshield inside the vehicle. Accordingly, in the head-up display device, the cover member disposed as the emission window for emitting the display image is particularly exposed to sunlight (sunbeam) with a high frequency.

Therefore, this cover member is required to have excellent light resistance, however, it cannot be said that the cover member in a current situation has excellent light resistance.

Such a problem is not limited to the cover member including the head-up display device, but also occurs in the same manner even in a cover member or the like included in a lamp lens provided on various lights such as a headlight and a brake lamp, and various sensors such as a speed sensor and an object sensor, included in a vehicle.

### Citation List

### Patent Literature

[PTL 1] Japanese Laid-open patent publication NO. 2015-49464
[PTL 2] Japanese Laid-open patent publication NO. 2017-116882

### Summary of Invention

### Technical Problem

An object of the present invention is to provide a translucent resin sheet having excellent light resistance which is used as a cover member, and a projection type display and a moving body having excellent reliability including such a translucent resin sheet.

### Solution to Problem

Such an object is achieved by the present invention described in the following (1) to (10).
(1) A translucent resin sheet which is used as a cover member installed to cover a window portion of a storage body which stores a light source emitting light and includes the window portion through which the light from the light source is emitted toward an outside, the translucent resin sheet including:
   a resin layer configured with a resin material as a main material; and
   a coating layer laminated on at least one surface of the resin layer,
   in which the coating layer contains a curable resin as a main material, and an ultraviolet absorber, and
   in which a color change of the translucent resin sheet measured based on ISO11664-4 after irradiating the coating layer with ultraviolet rays for 600 hours using a xenon weather meter based on Table 3-A method-Cycle No. 3 in JIS K 7350-2 is less than 5.0 [ΔE].
(2) The translucent resin sheet according to (1), in which the curable resin is a (meth)acrylic resin.
(3) The translucent resin sheet according to (1) or (2), in which the ultraviolet absorber includes a functional group which is reactive with the curable resin.
(4) The translucent resin sheet according to any one of (1) to (3), in which the resin material is a polycarbonate-based resin.
(5) The translucent resin sheet according to (4), in which the resin layer has a retardation, and the retardation is 500 nm or less.
(6) The translucent resin sheet according to any one of (1) to (5), in which the resin layer further contains an ultraviolet absorber.
(7) The translucent resin sheet according to any one of (1) to (6), in which the curable resin has no aromatic ring.
(8) The translucent resin sheet according to any one of (1) to (7), in which, after irradiating the coating layer with ultraviolet rays for 600 hours using the xenon weather meter based on Table 3-A method-Cycle No. 3 in JIS K 7350-2, in the translucent resin sheet, an adhesion of the coating layer cut in a grid shape by a cross-cut method specified in JIS K 5600-5-6 with respect to the resin layer is 90% or more.
(9) A projection type display including the translucent resin sheet according to any one of (1) to (8) as the cover member.
(10) A moving body including the projection type display according to (9).

### Advantageous Effects of Invention

The translucent resin sheet of the present invention is used for the cover member installed to cover the window portion of the storage body which stores the light source which emits a light and includes the window portion, from which the light from the light source is emitted toward the outside.

In the present invention, in such a translucent resin sheet, the translucent resin sheet includes the resin layer configured with the resin material as a main material, and the coating layer laminated on at least one surface of the resin layer. The coating layer includes the curable resin as a main material, and the ultraviolet absorber. The color change of the translucent resin sheet measured based on ISO11664-4 after irradiating the coating layer with ultraviolet rays for 600 hours using a xenon weather meter based on Table 3-A method-Cycle No. 3 in JIS K 7350-2 is less than 5.0 [ΔE]. Accordingly, this translucent resin sheet can be used as the cover member having excellent light resistance. Therefore, the projection type display and the moving body including such a translucent resin sheet as the cover member can be configured to have excellent reliability.

### Brief Description of Drawings

FIG. 1 is a side view showing an embodiment of a head-up display device of an automobile, which includes a translucent resin sheet of the present invention as a cover member.
FIG. 2 is an enlarged cross-sectional view of a region [A] surrounded by a long dashed short dashed line of FIG. 1.
FIG. 3 is an enlarged cross-sectional view of a translucent resin sheet of the present invention applied to a cover member of FIG. 2.

### Description of Embodiments

Hereinafter, a translucent resin sheet, a projection type display, and a moving body of the present invention will be described in detail based on suitable embodiments illustrated in the accompanying drawings.

First, prior to describing the translucent resin sheet, the projection type display, and the moving body of the present invention, a head-up display device (the projection type display) of an automobile including the translucent resin sheet of the present invention as the cover member will be described.

### <Head-up display>

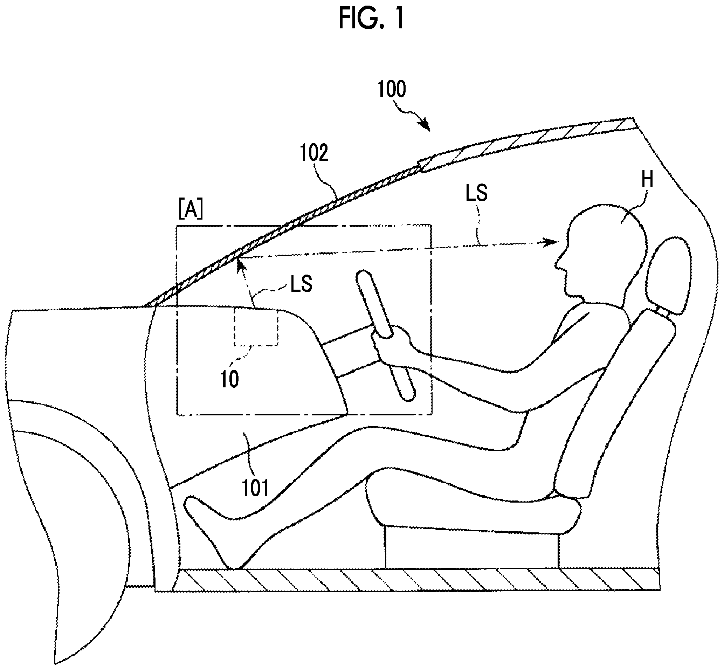

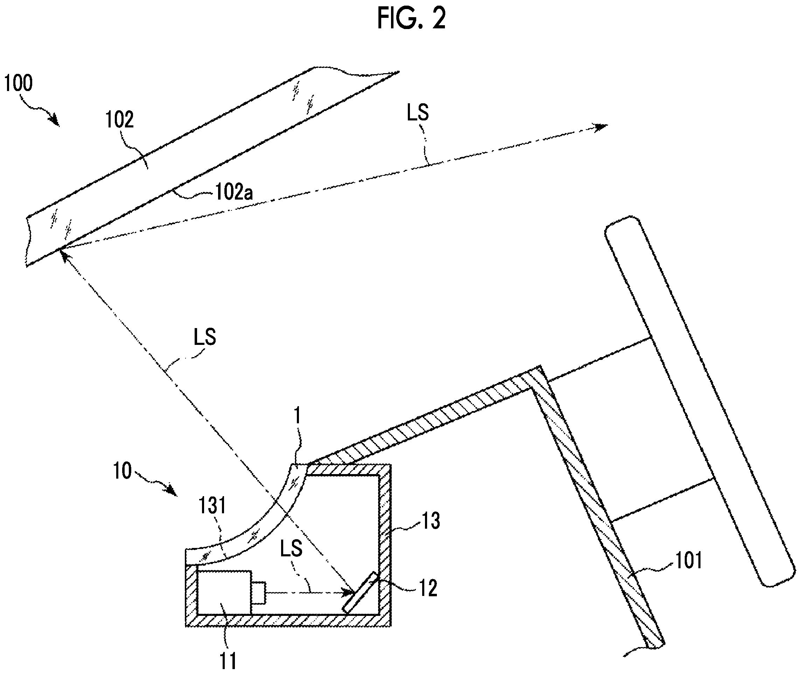

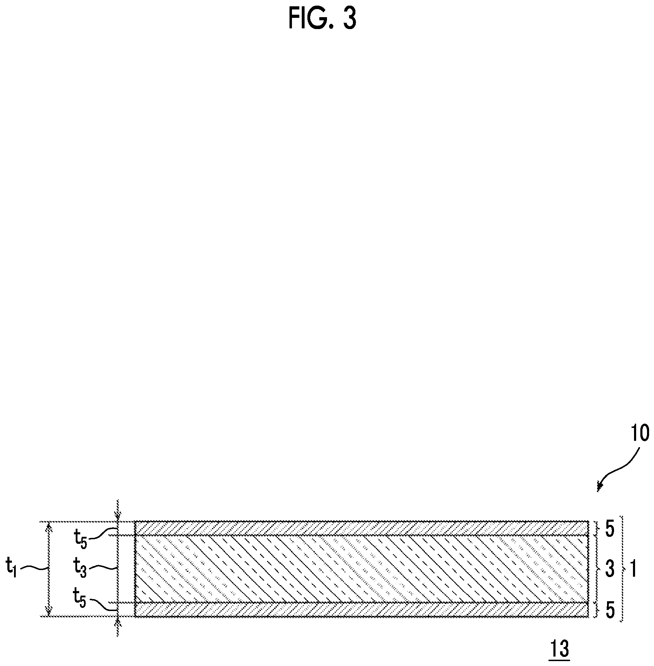

FIG. 1 is a side view showing an embodiment of a head-up display device of an automobile, which includes the translucent resin sheet of the present invention as the cover member. FIG. 2 is an enlarged cross-sectional view of a region [A] surrounded by a long dashed short dashed line of FIG. 1. FIG. 3 is an enlarged cross-sectional view of the translucent resin sheet of the present invention applied to the cover member of FIG. 2. Hereinbelow, for convenience of explanation, in FIGS. 1 to 3, an upper side is referred to as "upper" or "upward", and a lower side is referred to as "lower" or "downward". In addition, in FIGS. 1 and 2, a left side is referred to as "front" or "ahead", and a right side is referred to as "rear" or "backward". In addition, in FIG. 3, for ease of understanding, a cover member is shown in a flat state, and a thickness direction is exaggerated and schematically shown.

As shown in FIG. 1, a head-up display 10 is mounted on and used in an automobile 100. The head-up display 10 is embedded in an upper part of a dashboard 101.

As shown in FIG. 2, the head-up display 10 includes a display unit 11, a reflective member 12, and a storage body 13.

In the present embodiment, the display unit 11 is configured with a liquid crystal display, and functions as a light source which emits a display image LS as an emission light. The display unit 11 is configured such that a full-color display image LS is formed by emitting a light of each color of red (R), green (G), and blue (B) configuring each pixel of the display image LS from the display unit 11 as the light source.

The reflective member 12 is configured with a prism, for example, and can reflect the display image LS from the display unit 11. The display image LS reflected by the reflective member 12 is projected onto a rear surface (an inner surface) 102a of a windshield 102 using the windshield 102 as a screen. This projected light is recognized by a driver H as the display image LS (see FIGS. 1 and 2).

As shown in FIG. 2, the storage body 13 (a housing) has a box shape, and can store the display unit 11, the reflective member 12, and other components configuring the head-up display 10 therein. In addition, the storage body 13 includes a window portion 131 configured with an opening portion that is open toward a side of the windshield 102. The display image LS is emitted toward the outside of the storage body 13, that is, the windshield 102 through the window portion 131.

In addition, in the window portion 131 of the storage body 13, a cover member 1 having light-transmitting properties (a translucent cover member) is installed (mounted) to cover the window portion 131 in a curved state in which a portion on a side of the storage body 13 is convex and a portion on a side of the windshield 102 is concave by forming a concave portion at a center portion. Accordingly, the display image LS can be emitted toward the windshield 102, and it is possible to prevent foreign substances such as dust from entering the inside of the storage body 13 through the window portion 131. Therefore, it is possible to prevent the display image LS of the display unit 11 or the reflective member 12 from becoming cloudy or dirty due to the foreign substances. In addition, by obtaining the curved state in which the concave portion is formed, the cover member 1 is configured to easily reflect sunlight, and it is possible to accurately suppress the sunlight from entering into the storage body 13. Further, for example, it is possible to prevent the cover member 1 from protruding from the dashboard 101, and therefore, it is possible to prevent the cover member 1 from blocking a view of the driver H. In a case where it is not necessary to exhibit an effect obtained by providing the curved shape in the cover member 1, the cover member 1 may be installed on the window portion 131 in a flat plate shape without having a curved shape.

### <Cover member>

The cover member 1 (a translucent cover member) is configured with a translucent resin sheet of the present invention having light transmittance. In the present embodiment, as shown in FIG. 3, the cover member 1 includes a resin layer 3 configured with a resin material as a main material, and a coating layer 5 laminated on both surfaces of the resin layer 3. The coating layer 5 includes a curable resin as a main material, and an ultraviolet absorber. The color change of the cover member 1 measured based on ISO11664-4 after irradiating the coating layer 5 with ultraviolet rays for 600 hours using a xenon weather meter based on Table 3-A method-Cycle No. 3 in JIS K 7350-2 is less than 5.0 [ΔE] (requirement A).

As described above, since the cover member 1 having light transmittance is configured with the translucent resin sheet of the present invention, the cover member 1 exhibits excellent light resistance even when the cover member 1 is mounted on the window portion 131 of the storage body 13 to be exposed to a sunbeam as shown in FIG. 2. Therefore, the head-up display 10 and the automobile 100 in which the cover member 1 is mounted on the window portion 131 can be configured to have excellent reliability.

Hereinafter, the cover member 1, that is, each layer configuring the translucent resin sheet of the present invention will be described.

The resin layer 3 is a base material that configures a main layer of the cover member 1, and is configured with a resin material as a main material. A content of the resin material in the resin layer 3 is preferably 75% by weight or more and 100% by weight or less, more preferably 80% by weight or more and 99.9% by weight or less, and particularly preferably 85% by weight or more and 99.8% by weight or less.

The resin material is not particularly limited as long as it has light-transmitting properties. Examples thereof include a polystyrene-based resin, a polyethylene-based resin, a polypropylene-based resin, a polyester-based resin such as polyethylene terephthalate (PET) and polyethylene naphthalate (PEN), a polycarbonate-based resin, a vinyl chloride-based resin, a polyacetal-based resin, and the like. These can be used singly as one kind or in combination of two or more kinds thereof. Among these, a polycarbonate-based resin is particularly preferable. A cured product of the polycarbonate-based resin has excellent transparency (light-transmitting properties), mechanical strength such as rigidity or the like, and heat resistance. Therefore, by using the polycarbonate-based resin as the resin material, the transparency, impact resistance, and heat resistance of the cover member 1 can be improved. In addition, in a case where a retardation is imparted to the cover member 1 by using the polycarbonate-based resin, a magnitude thereof can be comparatively easily set within a range which will be described below.

In addition, a viscosity-average molecular weight of the polycarbonate-based resin is preferably 19,000 or more and 40,000 or less, and more preferably 19,500 or more and 35,000 or less. Thus, the effect of using the polycarbonate-based resin as the resin material can be more significantly exhibited.

The resin layer 3 may not have a retardation, however, for example, it is preferable that the resin layer 3 has a retardation (phase difference; birefringence × thickness) by forming a sheet material formed of the resin material as a main material by performing stretching process to provide the sheet material in a stretched state.

As described above, since the resin layer 3 has a retardation, the display image LS (the emission light) emitted from the display unit 11 can be reliably projected onto the rear surface 102a of the windshield 102 as a screen with a designed color tone, even when the cover member 1 is mounted on the window portion 131 of the storage body 13 in a curved state as shown in FIG. 2.

In addition, as a method for imparting a retardation to the resin layer 3, the following stretching process can be performed. That is, a sheet material formed to be thicker than an average thickness t₃ of the resin layer 3 is prepared. Then, the sheet material in a softened or molten state is provided in a stretched state by stretching toward one direction until a thickness thereof reaches the average thickness t₃, and accordingly, in the layer of the resin layer 3, resin materials (polymers) are arranged along the one stretched direction. This arrangement of resin materials allows the resin layer 3 to have a retardation (phase difference; birefringence × thickness).

In addition, the retardation may be imparted to the resin layer 3 by the following extrusion process in addition to the stretching process described above. That is, a softened or molten material formed of the resin material in a softened or molten state as a main material is extruded as a sheet material in a softened or molten state. After that, an extrusion process of transferring and cooling the sheet material is performed. As a result, in the layer of the formed resin layer 3, the resin materials (polymers) are arranged along the one extruded direction. As a result, the resin layer 3 has a retardation (phase difference; birefringence × thickness).

In addition, when performing the stretching process, a retardation (Re) of the resin layer 3 can be set to a desired magnitude (value) by suitably setting conditions such as conditions when the sheet material in the softened or molten state is stretched toward one direction, that is, heating conditions of the sheet material, cooling conditions of the stretched sheet material, stretching conditions of the sheet material (a stretching force and a stretching speed), and the like.

Furthermore, when performing the extrusion process, the retardation (Re) of the resin layer 3 can be set to a desired magnitude (value) by suitably setting conditions such as conditions when a softened or molten material in the softened or molten state is extruded as a sheet material, that is, heating conditions of the softened or molten material (a sheet material), cooling conditions of the extruded sheet material, extrusion conditions of the sheet material (a transfer speed), and the like.

The retardation (Re) of the resin layer 3 is, for example, preferably 500 nm or less, and more preferably 80 nm or more and 250 nm or less. Thus, the effect obtained by imparting the retardation (Re) to the resin layer 3 can be more significantly exhibited.

In addition, the resin layer 3 may include various additives such as, for example, an ultraviolet absorber, a heat ray absorber, a plasticizer, an antioxidant, a coloring material (a coloring agent), or the like, as necessary, in addition to the resin material as the main material described above, and among these, it is preferable to include an ultraviolet absorber. Accordingly, the color change of the cover member 1 (the translucent resin sheet) measured based on ISO11664-4 after irradiating the coating layer 5 with ultraviolet rays for 600 hours using a xenon weather meter based on Table 3-A method-Cycle No. 3 in JIS K 7350-2 can be more reliably set to less than 5.0 [ΔE]. That is, the requirement A can be satisfied.

In addition, as the ultraviolet absorber and the heat ray absorber, an ultraviolet absorber and a heat ray absorber, which will be described later, included in the coating layer 5 are similarly used. A content of the ultraviolet absorber in the resin layer 3 is not particularly limited, and is preferably 0.01 parts by weight or more and 10.0 parts by weight or less, more preferably 0.03 parts by weight or more and 8.0 parts by weight or less, and even more preferably 0.05 parts by weight or more and 5.0 parts by weight or less with respect to 100 parts by weight of the resin material in the resin layer 3. Thus, the light resistance of the cover member 1 (the translucent resin sheet) is improved.

In addition, examples of the plasticizer include polyethylene glycol, polyamide oligomer, ethylene bisstearamide, phthalate ester, polystyrene oligomer, polyethylene wax, silicone oil, and the like, and these can be used singly as one kind or in combination of two or more kinds thereof.

The average thickness t₃ of the resin layer 3 is preferably 0.3 mm or more and 0.6 mm or less, and more preferably 0.32 mm or more and 0.54 mm or less. By setting the average thickness t₃ of the resin layer 3 within the range, the cover member 1 can reliably exhibit the function as the cover member which covers the window portion 131, even when the cover member 1 is mounted to cover the window portion 131 of the storage body 13 in the curved state in which the cover member 1 is curved, as shown in FIG. 2.

In addition, a refractive index of the resin layer 3 is not particularly limited, and for example, it is preferably 1.58 or more and 1.60 or less, and more preferably 1.585 or more and 1.595 or less.

In addition, on both of an upper surface and a lower surface of the resin layer 3, the coating layer 5 configured with the curable resin as a main material is provided as an outermost layer. Thus, the coating layer 5 functions as a protective layer which protects the resin layer 3.

The coating layer 5 is configured with a cured product of a curable resin composition including a curable resin as a main material, and an ultraviolet absorber. Accordingly, excellent light resistance can be imparted to the coating layer 5. As a result, the cover member 1 (the translucent resin sheet) satisfies that the color change of the cover member 1 measured based on ISO11664-4 after irradiating the coating layer 5 with ultraviolet rays for 600 hours using a xenon weather meter based on Table 3-A method-Cycle No. 3 in JIS K 7350-2 is less than 5.0 [ΔE] (the requirement A). A content of the curable resin in the coating layer 5 is preferably 75% by weight or more and 99.9% by weight or less, more preferably 80% by weight or more and 99% by weight or less, and particularly preferably 85% by weight or more and 98% by weight or less.

Examples of the curable resin include a curable resin and the like including at least one of a curable resin including a (meth)acrylic resin as a main component, a curable resin including a polyester-based resin as a main component, a curable resin including an epoxy-based resin as a main component, a curable resin including a vinyl phenol-based resin as a main component, as a main component. The curable resin may include any of the above curable resin in an amount of 50% by weight as a main component, and one or more other curable resins may be included as sub-components. Among these, a curable resin containing a (meth)acrylic resin as a main component is preferable. Thus, it is possible to comparatively easily improve the adhesion with the resin layer 3. Therefore, more excellent strength can be imparted to the cover member 1, and the cover member 1 can be configured to satisfy not only the requirement A but also a requirement B which will be described later.

In addition, it is preferable that the curable resin does not have an aromatic ring in its structure. This makes it possible to accurately suppress or prevent alteration and deterioration in the curable resin, thereby imparting excellent light resistance to the coating layer 5 and the resin layer 3. Therefore, by imparting excellent light resistance to the cover member 1, the cover member 1 (the translucent resin sheet) can be configured to comparatively easily satisfy that the color change is less than 5.0 [ΔE], that is, the requirement A.

The curable resin not having an aromatic ring is not particularly limited as long as it does not have an aromatic ring in its structure, and examples thereof include a curable resin in which a main chain is configured with an aliphatic structure. The curable resin, in which the main chain is configured with an aliphatic structure, may include a side chain and the side chain may also be configured with the aliphatic structure. In addition, the aliphatic structure may be any of a linear, a branched, and a cyclic structure. Furthermore, the aliphatic structure may contain heteroatoms such as oxygen atoms, sulfur atoms, nitrogen atoms, and phosphorus atoms, and at least some of carbon atoms may be substituted with fluorine atoms.

For these reasons, it is preferable that the curable resin contains a (meth)acrylic resin, in which a main chain is configured with an aliphatic structure, as a main component, and specifically, examples of such a curable resin include a curable resin containing urethane (meth)acrylate as a main component. By selecting urethane (meth)acrylate as the curable resin, the curable resin, in which the main chain is configured with the aliphatic structure, can be available comparatively easily with low cost, and the cover member 1 can be configured to satisfy the requirement A. In addition, the urethane (meth)acrylate is a compound having excellent flexibility because of a urethane bond that the compound has. Therefore, since the curable resin contains urethane (meth)acrylate as the main component, it is possible to impart excellent elasticity (flexibility) to the coating layer 5. Therefore, as in the present embodiment, even when the cover member 1 is installed (mounted) to cover the window portion 131 in the curved state in which the cover member 1 is curved, it is possible to accurately suppress or prevent generation of cracks on the coating layer 5.

Therefore, hereinafter, a curable resin composition (a resin composition) including a curable resin containing urethane (meth)acrylate, in which a main chain is configured as an aliphatic structure, as a main component will be described.

### (Urethane (meth)acrylate)

The urethane (meth)acrylate refers to a compound having a main chain, which has a urethane bond (-OCONH-), and a (meth)acryloyl group linked to the main chain, and in the present embodiment, the main chain is configured with an aliphatic structure. Furthermore, the urethane (meth)acrylate is a monomer or an oligomer.

By containing the urethane (meth)acrylate as a main component in the curable resin, as described above, the cover member 1 can be configured to satisfy that the color change is less than 5.0 [ΔE], that is, the requirement A. In addition, since the urethane (meth)acrylate is a compound having excellent flexibility, it is possible to impart excellent elasticity (flexibility) to the coating layer 5.

In addition, the urethane (meth)acrylate preferably has a structure in which the number of (meth)acryloyl groups in one molecule is 2 or more, more preferably has a structure in which the number of (meth)acryloyl groups in one molecule is 5 or more, and even more preferably has a structure in which the number of (meth)acryloyl groups in one molecule is 10 or more.

In a case where the number of (meth)acryloyl groups) in one molecule of the urethane (meth)acrylate is 2 or more, the urethane (meth)acrylate can react to form a network. Accordingly, since a crosslinking density of the coating layer 5 configured with the curable resin is improved, the light resistance of the coating layer 5 can be further increased. Thus, the cover member 1 can be configured to more reliably satisfy that the color change is less than 5.0 [ΔE], that is, the requirement A.

The urethane (meth)acrylate can be obtained as a product of a reaction between an isocyanate compound, which is obtained by causing a reaction between polyol and diisocyanate, and a (meth)acrylate monomer having a hydroxyl group.

Examples of the polyol include polyether polyol, polyester polyol, and polycarbonate diol.

The polyether polyol is preferably polyethylene oxide, polypropylene oxide, or an ethylene oxide-propylene oxide random copolymer, and preferably has a number-average molecular weight less than 1,300. In a case where polyether polyol having a number-average molecular weight of 1,300 or more is used, the flexibility of the coating layer 5 is excessively high, and for example, there is a risk that scratches and the like are easily made on the coating layer 5 (the cover member 1).

The polyester polyol can be obtained, for example, by causing a polycondensation reaction between diol and dicarboxylic acid or dicarboxylic acid chloride or by causing an ester exchange reaction by means of esterifying diol or dicarboxylic acid. As the dicarboxylic acid, adipic acid, succinic acid, glutaric acid, pimelic acid, sebacic acid, azelaic acid, maleic acid, terephthalic acid, isophthalic acid, phthalic acid, and the like are used. As the diol, ethylene glycol, 1,4-butanediol, 1,6-hexanediol, diethylene glycol, dipropylene glycol, triethylene glycol, tetraethylene glycol, tripropylene glycol, tetrapropylene glycol, and the like are used. By combining these dicarboxylic acids and diols, the polyester polyol having the aliphatic structure (aliphatic polyester polyol) can be obtained.

Polycarbonate diol can be obtained, for example, by causing a reaction between diol and carbonates. As the diol, 1,4-butanediol, 1,6-hexanediol, ethylene glycol, propylene glycol, diethylene glycol, triethylene glycol, 1,2-propylene glycol, 1,3-propylene glycol, dipropylene glycol, 2-ethyl-1,3-hexanediol, 1,5-pentanediol, 3-methyl-1,5-pentanediol, 1,4-cyclohexanediol, polyoxyethylene glycol, and the like are used. These may be used singly as one kind, or in combination of two or more kinds thereof. As carbonates, dimethyl carbonate, diphenyl carbonate, ethylene carbonate, and the like are used, and these may be used singly as one kind, or in combination of two or more kinds thereof. By combining these carbonates and diol, polycarbonate diol having an aliphatic structure (aliphatic polycarbonate diol) can be obtained.

Examples of the (meth)acrylate monomer having a hydroxyl group include trimethylolpropane triacrylate, pentaerythritol triacrylate, dipentaerythritol triacrylate, 2-hydroxyethyl acrylate, 2-hydroxypropyl acrylate, 2-hydroxybutyl acrylate, 3-hydroxybutyl acrylate, polyethylene glycol monoacrylate, and the like.

The weight-average molecular weight of the urethane (meth)acrylate is not particularly limited, but is preferably equal to or greater than 1.0 × 10³ and equal to or smaller than 1.5 × 10⁴, and more preferably equal to or greater than 1.5 × 10³ and equal to or smaller than 1.0 × 10⁴. In a case where the weight-average molecular weight of the urethane (meth)acrylate is within the above range, the balance between the elasticity and the hardness of the coating layer 5 becomes excellent. Accordingly, in a case where the cover member 1 is molded in the curved shape, the occurrence of cracks in a bending portion can be inhibited.

A weight-average molecular weight of the urethane (meth)acrylate can be measured, for example, by gel permeation chromatography (GPC).

A content of urethane (meth)acrylate is not particularly limited, but in a curable resin composition containing a curable resin, it is preferably 65% by weight or more and 80% by weight or less, and more preferably 70% by weight or more and 75% by weight or less. By setting the content of the urethane (meth)acrylate in the curable resin composition within the range described above, the cover member 1 can be configured to more reliably satisfy that the color change is less than 5.0 [ΔE], that is, the requirement A, and the coating layer 5 has a good balance between flexibility and hardness.

### (Polyfunctional (meth)acrylate)

In addition, in the curable resin composition, the curable resin preferably contains urethane (meth)acrylate as a main component and further contains polyfunctional (meth)acrylate.

The polyfunctional (meth)acrylate is a (meth)acrylate having two or more (meth)acryloyl groups, which contribute to a polymerization reaction, in one molecule. By including such a polyfunctional (meth)acrylate in the curable resin, a (meth)acryloyl group included in the polyfunctional (meth)acrylate is combined with a (meth)acryloyl group included in the urethane (meth)acrylate to form a network of the urethane (meth)acrylate and the polyfunctional (meth)acrylate. Accordingly, since a crosslinking density of the coating layer 5 configured with the curable resin is improved, the light resistance of the coating layer 5 can be further increased. That is, the cover member 1 can be configured to more reliably satisfy that the color change is less than 5.0 [ΔE] (the requirement A).

The polyfunctional (meth)acrylate just needs to have two or more (meth)acryloyl groups, which contribute to a polymerization reaction, in one molecule. The polyfunctional (meth)acrylate may be any of a monomer and an oligomer, and the molecular weight and the molecular structure thereof are not particularly limited.

Examples of the polyfunctional (meth)acrylate monomer include 1,4-butanediol diacrylate, ethoxylated cyclohexane dimethanol diacrylate, tricyclodecane dimethanol diacrylate, dipentaerythritol hexaacrylate (DPHA), caprolactone-modified dipentaerythritol hexaacrylate, tetrapentaerythritol decaacrylate, pentaerythritol tetraacrylate, ditrimethylolpropane triacrylate, trimethylolpropane triacrylate, pentaerythritol triacrylate, dipentaerythritol triacrylate, ethoxylated trimethylolpropane triacrylate, ethoxylated pentaerythritol triacrylate, ethoxylated pentaerythritol tetraacrylate, and the like.

In addition, examples of the polyfunctional (meth)acrylate oligomer include polyfunctional polyester (meth)acrylate, and the like.

The polyfunctional polyester (meth)acrylate oligomer can be obtained, for example, by esterifying hydroxyl groups of a polyester oligomer, which is obtained by the condensation of a polyvalent carboxylic acid and a polyhydric alcohol and has a hydroxyl group on both terminals, by using a (meth)acrylic acid. Furthermore, the polyfunctional polyester (meth)acrylate oligomer can be obtained, for example, by esterifying hydroxyl groups on the terminals of an oligomer, which is obtained by adding alkylene oxide to a polyvalent carboxylic acid, by using a (meth)acrylic acid.

A content of a (meth)acrylate monomer is not particularly limited, but in the curable resin composition containing the curable resin, it is preferably 10% by weight or more and 30% by weight or less, and more preferably 15% by weight or more and 25% by weight or less. By setting the content of the (meth)acrylate monomer in the curable resin composition within the range described above, the cover member 1 can be configured to more reliably satisfy that the color change is less than 5.0 [ΔE], that is, the requirement A.

The combination of the urethane (meth)acrylate and the polyfunctional (meth)acrylate monomer described above is not particularly limited, but specifically, it is preferably a combination of bifunctional urethane (meth)acrylate having two (meth)acryloyl groups in one molecule, decafunctional urethane (meth)acrylate having 10 (meth)acryloyl groups in one molecule, and hexafunctional (meth)acrylate having 6 (meth)acryloyl groups in one molecule. According to such a combination, the effect obtained by combining the urethane (meth)acrylate and the polyfunctional (meth)acrylate monomer can be more significantly exhibited, and thus, a three-dimensional crosslinked structure having a higher density is formed in the coating layer 5 to be formed. Therefore, the requirement A can be reliably satisfied for a long period of time.

In addition, in the present embodiment, in the curable resin composition, the curable resin containing the urethane (meth)acrylate as a main component contains the urethane (meth)acrylate and the polyfunctional (meth)acrylate described above as "main resins". Among these main resins, the urethane (meth)acrylate is an essential component, and the polyfunctional (meth)acrylate is a component which is preferred to be contained. In addition, in addition to the main resins, the curable resin may include at least one of isocyanate, silicon-modified (meth)acrylic resin, and the like as other resin components.

When isocyanate is included in the curable resin composition, isocyanate functions as a crosslinking agent which bonds (crosslinks) the urethane (meth)acrylate intermolecularly in the curable resin composition. That is, by including isocyanate as the crosslinking agent, a hydroxyl group included in the urethane (meth)acrylate reacts with an isocyanate group included in isocyanate to form a crosslinked structure configured with the urethane bond. As a result, an effect density of the coating layer 5 configured with the cured product of the curable resin composition is improved. Thus, the cover member 1 can be configured to more reliably satisfy that the color change is less than 5.0 [ΔE], that is, the requirement A.

The isocyanate is not particularly limited, and examples thereof include polyisocyanate having two or more isocyanate groups and the like. Particularly, it is more preferable that polyfunctional isocyanate having three or more isocyanate groups is included. Thus, the effect density of the coating layer 5 configured with the cured product of the curable resin composition is further improved.

In addition, the curable resin composition, that is, the coating layer 5 may contain a photopolymerization initiator. The photopolymerization initiator is not particularly limited. As the photopolymerization initiator, it is possible to use benzoin or benzoin alkyl ethers such as benzoin, benzoin methyl ether, benzoin ethyl ether, and benzoin isopropyl ether, aromatic ketones such as benzophenone and benzoyl benzoate, α-dicarbonyls such as benzyl, benzyl ketals such as benzyl dimethyl ketal and benzyl diethyl ketal, acetophenones such as acetophenone, 1-(4-dodecylphenyl)-2-hydroxy-2-methylpropan-1-one, 1-hydroxycyclohexylphenylketone, 2-hydroxy-2-methyl-1-phenyl-1-propan-1-one, 1-(4-isopropylphenyl)-2-hydroxy-2-methyl-propan-1-one, and 2-methyl-1-[4-(methylthio)phenyl]-2-morpholinopropan-1-one, anthraquinones such as 2-methylanthraquinone, 2-ethylanthraquinone, and 2-t-butylanthraquinone, thioxanthones such as 2,4-dimethylthioxanthone, 2-isopropylthioxanthone, and 2,4-diisopropylthioxanthone, phosphine oxides such as bis(2,4,6-trimethylbenzoyl)-phenyl phosphine oxide, α-acyl oximes such as 1-phenyl-1,2-propanedione-2-(o-ethoxycarbonyl)oxime, amines such as ethyl p-dimethylaminobenzoate and isoamyl p-dimethylaminobenzoate, and the like. Among these, acetophenones such as 1-(4-dodecylphenyl)-2-hydroxy-2-methylpropan-1-one, 1-hydroxycyclohexylphenylketone, 2-hydroxy-2-methyl-1-phenyl-1-propan-1-one, 1-(4-isopropylphenyl)-2-hydroxy-2-methyl-propan-1-one, and 2-methyl-1-[4-(methylthio)phenyl]-2-morpholinopropanone-1 are particularly preferable.

In addition, a content of the photopolymerization initiator is not particularly limited, but in the curable resin composition containing the curable resin, it is preferably 5% by weight or more and 15% by weight or less, and more preferably 5% by weight or more and 10% by weight or less. In a case where the content of the photopolymerization initiator in the curable resin composition is less than the lower limit value described above, it may be difficult to thoroughly curing the curable resin composition. In addition, even though the content of the photopolymerization initiator in the curable resin composition is higher than the upper limit value described above, the characteristics are not further improved.

In addition, in the present invention, the curable resin composition, that is, the coating layer 5 contains an ultraviolet absorber. By including the ultraviolet absorber in the curable resin composition, that is, the coating layer 5, the ultraviolet rays are absorbed in the coating layer 5, and the ultraviolet rays are suppressed or prevented from reaching the resin layer 3. Accordingly, in order to suppress the alteration and deterioration of the resin material included in the resin layer 3, and as a result, to improve the light resistance of the resin layer 3 and eventually the cover member 1, that is, to satisfy the requirement A, the ultraviolet absorber is included in the coating layer 5.

The ultraviolet absorber is not particularly limited, and examples thereof include a triazine-based compound, a benzophenone-based compound, a benzotriazole-based compound, and a cyanoacrylate-based compound. These can be used singly as one kind or in combination of two kinds thereof. Among these, a benzotriazole-based ultraviolet absorber is particularly preferably used. Among benzotriazole-based ultraviolet absorbers, a hydroxyphenyl benzotriazole-based ultraviolet absorber is more preferable. In this manner, the above-described effects can be exhibited more significantly. In addition, a hydroxyphenyl benzotriazole-based ultraviolet absorber can be available comparatively easily with low cost as an ultraviolet absorber having a functional group that is reactive with a curable resin, which will be described later.

In addition, it is preferable that the ultraviolet absorber has a functional group that is reactive with the curable resin. Accordingly, this ultraviolet absorber can also be incorporated into the network formed by the reaction of the curable resin (for example, the urethane (meth)acrylate). Therefore, it is possible to accurately suppress or prevent the ultraviolet absorber from leaking, that is, bleeding out, from the coating layer 5 configured with the curable resin composition. Thus, the requirement A described above and a requirement B which will be described later (particularly, the requirement B which will be described later) can be more reliably satisfied for a long period of time.

In addition, when the curable resin contains the urethane (meth)acrylate as a main component, the ultraviolet absorber having a (meth)acryloyl group as a functional group that is reactive with the curable resin is preferably used as an ultraviolet absorber having a functional group that is reactive with the curable resin, since a network can be formed by radical polymerization between the urethane (meth)acrylate and the (meth)acryloyl group included in both. In addition, the ultraviolet absorber having a (meth)acryloyl group as a functional group can be obtained as, for example, a product of reaction between a hydroxyphenyl benzotriazole-based ultraviolet absorber having a hydroxyl group and a (meth)acrylate monomer.

In addition, a content of the ultraviolet absorber is not particularly limited, but in the curable resin composition containing the curable resin, it is preferably 1.0% by weight or more and 10.0% by weight or less, more preferably 1.0% by weight or more and 8.0% by weight or less, and even more preferably 1.0% by weight or more and 5.0% by weight or less. When the content of the ultraviolet absorber in the curable resin composition is less than the lower limit value, there is a risk that the effect obtained by adding the ultraviolet absorber to the coating layer 5 is not sufficiently obtained depending on the kind of the ultraviolet absorber. In addition, even though the content of the ultraviolet absorber in the curable resin composition is higher than the upper limit value described above, the light resistance is not further improved, and the transparency of the coating layer 5 or the adhesion of the coating layer 5 to the resin layer 3 may deteriorate.

In addition, the curable resin composition, that is, the coating layer 5 preferably contain a light stabilizer. By including the light stabilizer in the curable resin composition, that is, the coating layer 5, it is possible to improve stabilization of the coating layer 5 when exposed to sunbeam. As a result, it is possible to improve the light resistance of the coating layer 5 and eventually the cover member 1, that is, reliably satisfy the requirement A.

The light stabilizer is not particularly limited, but examples thereof include a hindered amine-based light stabilizer, a nickel-based light stabilizer, and the like, and these can be used singly as one kind or in combination of two kinds thereof. Among these, the hindered amine-based light stabilizer is particularly preferably used. In this manner, the above-described effects can be exhibited more significantly. In addition, the hindered amine-based light stabilizer can be available comparatively easily with low cost as a light stabilizer having a functional group that is reactive with a curable resin, which will be described later.

In addition, it is preferable that the light stabilizer has a functional group that is reactive with the curable resin. Accordingly, this light stabilizer can also be incorporated into the network formed by the reaction of the curable resin (for example, the urethane (meth)acrylate). Therefore, it is possible to accurately suppress or prevent the light stabilizer from leaking, that is, bleeding out, from the coating layer 5 configured with the curable resin composition. Therefore, the requirement A can be more reliably satisfied for a long period of time.

In addition, when the curable resin contains the urethane (meth)acrylate as a main component, the light stabilizer having a (meth)acryloyl group as a functional group that is reactive with the curable resin is preferably used as a light stabilizer having a functional group that is reactive with the curable resin, since a network can be formed by radical polymerization between the urethane (meth)acrylate and the (meth)acryloyl group included in both. In addition, the light stabilizer having a (meth)acryloyl group as a functional group can be obtained as, for example, a product of reaction between the hindered amine-based stabilizer having a hydroxyl group and a (meth)acrylate monomer.

In addition, a content of the light stabilizer is not particularly limited, but in the curable resin composition containing the curable resin, it is preferably 0.1% by weight or more and 2% by weight or less, and more preferably 0.5% by weight or more and 1.5% by weight or less. When the content of the light stabilizer in the curable resin composition is less than the lower limit value, there is a risk that the effect obtained by adding the light stabilizer to the coating layer 5 is not sufficiently obtained depending on the kind of the light stabilizer. In addition, even though the content of the light stabilizer in the curable resin composition is higher than the upper limit value described above, the light resistance is not further improved, and the transparency of the coating layer 5 or the adhesion of the coating layer 5 to the resin layer 3 may deteriorate.

The curable resin composition may contain other additives in addition to the materials described above.

Examples of those other additives include a heat ray absorber, a plasticizer, a coloring agent, a sensitizer, a surfactant, an antioxidant, a reduction inhibitor, an antistatic agent, a surface conditioner (a leveling agent), and the like.

The coating layer 5 is configured with the cured product of the curable resin composition described above, but an average thickness t₅ thereof is not particularly limited, and is preferably 1.0 um or more and 15.0 um or less, and more preferably 2.0 um or more and 11 um or less. In a case where the average thickness t₅ of each coating layer 5 is less than the lower limit value described above, the light resistance of the cover member 1 may decrease. On the other hand, when the thickness of the coating layer 5 is higher than the upper limit value, there is a risk that, when the cover member 1 is configured to be in a curved state in which a concave portion is formed, as in the present embodiment, cracks occur in a region where the concave portion is provided.

In addition, a refractive index of the coating layer 5 is not particularly limited, and for example, it is preferably 1.40 or more and 1.60 or less, and more preferably 1.450 or more and 1.595 or less.

The coating layer 5 is formed by, for example, applying a varnish-like curable resin composition containing a solvent onto the resin layer 3 to form a liquid film, and irradiating the liquid film with ultraviolet rays to cure the liquid film.

In addition, in the cover member 1, as long as the cover member 1 can satisfy the requirement A, any one of two coating layers 5 provided on both of an upper surface and a lower surface (particularly, the coating layer 5 provided on the lower surface) may be omitted.

Herein, since the cover member 1 includes the resin layer 3 and the coating layer 5 having the configuration described above, the requirement A may be satisfied, that is, it may satisfy that the color change of the cover member 1 (the translucent resin sheet) measured based on ISO11664-4 after irradiating the coating layer 5 with ultraviolet rays for 600 hours using a xenon weather meter based on Table 3-A method-Cycle No. 3 in JIS K 7350-2 is less than 5.0 [ΔE]. In this regard, the color change is preferably less than 3.0 [ΔE], and the color change is more preferably less than 2.0 [ΔE]. Therefore, it can be said that the cover member 1 has a configuration that exhibits more excellent light resistance.

In addition, after the cover member 1 is irradiated with ultraviolet rays for 640 hours, the adhesion of the coating layer 5 cut in a grid shape by a cross-cut method specified in JIS K 5600-5-6 with respect to the resin layer 3 is preferably 90% or more (the requirement B), and more preferably 92% or more and 100% or less. Accordingly, even though the cover member 1 is exposed to sunbeam, it can be said that excellent adhesion is maintained between the resin layer 3 and the coating layer 5. Therefore, more excellent strength is imparted to the cover member 1. Even though the cover member 1 is mounted on the window portion 131 of the storage body 13 in a curved state as shown in FIG. 2, the peeling of the coating layer 5 from the resin layer 3 is more accurately suppressed or prevented, and therefore, the cover member 1 exhibits more excellent light resistance.

In addition, a total thickness t₁ of the cover member 1 is preferably 0.10 mm or more and 1.5 mm or less, and more preferably 0.30 mm or more and 1.0 mm or less. By setting the total thickness t₁ of the cover member 1 within the range, the cover member 1 can reliably exhibit the function as the cover member which covers the window portion 131, even when the cover member 1 is mounted to cover the window portion 131 of the storage body 13 in the curved state in which the cover member 1 is curved, as shown in FIG. 2.

Hereinabove, the translucent resin sheet, the projection type display, and the moving body of the present invention have been described above with reference to the illustrated embodiment, but the present invention is not limited thereto. For example, each unit constituting the translucent resin sheet can be substituted with an optional constituent element exhibiting the same function. In addition, optional components may be added.

In addition, the translucent resin sheet may have a configuration in which at least one of other layers (an intermediate layer) such as an adhesive layer and the like is interposed between the resin layer and the coating layer.

In addition, in the embodiment, a case in which the translucent resin sheet (the cover member) of the present invention is applied to the cover member including the head-up display (the projection type display) of the automobile has been described. In this regard, the translucent resin sheet of the present invention is not limited to the cover member described above, and is suitably applied to a member exposed to the sunbeam, for example, can also be suitably applied to a cover member or the like included in a lamp lens provided on various lights such as a headlight and a brake lamp, and various sensors such as a speed sensor and an object sensor, included in a vehicle.

### [Examples]

Hereinafter, the present invention will be described in more detail based on examples. The present invention is not limited to these examples.

### 1. Preparation of raw materials

### <Polycarbonate-based resin>

As a polycarbonate-based resin, bisphenol A-type polycarbonate (manufactured by Mitsubishi Engineering Plastics, "E2000F-N") was prepared.

### <Combination 1>

As a combination 1 containing urethane (meth)acrylate and polyfunctional (meth)acrylate, a combination (manufactured by Mitsubishi Chemical Corporation, "UV-1700B") containing decafunctional urethane acrylate (45% by weight) in which a main chain is configured with an aliphatic structure and a hexafunctional acrylate monomer (DPHA, 55% by weight) in which a main chain is configured with an aliphatic structure was prepared.

### <Urethane (meth)acrylate 1>

As urethane (meth)acrylate 1, bifunctional urethane acrylate (manufactured by DAICEL-ALLNEX Ltd., "EB2000") in which a main chain is configured as an aliphatic structure was prepared.

### <Urethane (meth)acrylate 2>

As urethane (meth)acrylate 2, bifunctional urethane acrylate (manufactured by DKS Co. Ltd., "GX-8644D") in which a main chain has an aromatic structure was prepared.

### <Polyfunctional (meth)acrylate 1>

As polyfunctional (meth)acrylate 1, bifunctional acrylate (manufactured by Shin-Nakamura Chemical Co., Ltd., "A-DCP") in which a main chain is configured with an aliphatic structure was prepared.

### <Photopolymerization initiator 1>

As a photopolymerization initiator 1, a radical polymerization initiator (manufactured by IGM Resins B.V., "Omnirad184") was prepared.

### <Ultraviolet absorber 1>

As an ultraviolet absorber 1, a hydroxyphenyl triazine-based ultraviolet absorber (manufactured by BASF Japan, "Tinuvin 1577 ED") was prepared.

### <Ultraviolet absorber 2>

As an ultraviolet absorber 2, a hydroxyphenyl benzotriazole-based ultraviolet absorber (manufactured by Otsuka Chemical Co., Ltd., "RUVA-93") having a (meth)acryloyl group was prepared.

### <Ultraviolet absorber 3>

As an ultraviolet absorber 3, a hydroxyphenyl triazine-based ultraviolet absorber (manufactured by BASF Japan, "Tinuvin 400") was prepared.

### <Light stabilizer 1>

As a light stabilizer 1, a hindered amine-based light stabilizer (HALS, manufactured by Adeka Corporation, "LA-82") having a (meth)acryloyl group was prepared.

### <Leveling agent 1>

As a leveling agent 1, polyether-modified polydimethylsiloxane (manufactured by Tetsutani Co., Ltd., "BYK-378") was prepared.

### <coloring material 1>

As a coloring material 1, a blue coloring material (manufactured by Arimoto Chemical Co.Ltd., "Solvent Violet 13") was prepared.

### <Coloring material 2>

As a coloring material 2, a red coloring material (manufactured by Arimoto Chemical Co.Ltd., "Solvent Red 52") was prepared.

### 2. Preparation of curable resin composition for forming coating layer

As a curable resin containing urethane (meth)acrylate as a main component, the combination 1 containing urethane (meth)acrylate and polyfunctional (meth)acrylate: 14.7003 parts by weight, the urethane (meth)acrylate 1: 2.1000 parts by weight, the polyfunctional (meth)acrylate 1: 4.2000 parts by weight, and the photopolymerization initiator 1: 1.4700 parts by weight were blended to obtain a mixture. The mixture was further added with the ultraviolet absorber 2: 0.5250 parts by weight, and propylene glycol monomethyl ether (PM): 77.0014 parts by weight as a solvent was diluted. After that, the diluted mixture was stirred to prepare a curable resin composition used for forming the coating layer (see Table 1).

### 3. Manufacture of cover member (translucent resin sheet)

### (Example 1)

[1] First, the prepared polycarbonate-based resin: 100.0 parts by weight, the ultraviolet absorber 1: 0.05 parts by weight, the coloring material 1: 0.00018 parts by weight, and the coloring material 2: 0.00004 parts by weight were blended to obtain a mixture. After that, this mixture was extruded into a sheet shape from a T-die included in a single screw extruder to obtain a sheet body. Then, the sheet body was extruded at a heating temperature of 270°C and then cooled to obtain the resin layer 3 having the average thickness t₃ of 0.50 mm and a degree of stretching of 200%.

In addition, when a retardation of the obtained resin layer 3 was measured at a measurement wavelength of 543 nm using a phase difference measurement device (manufactured by Axometrics, "Axoscan"), it was 110 nm.

[2] Next, the curable resin composition prepared in advance was applied to the upper surface and the lower surface of the resin layer 3, respectively, and heated and dried to obtain a coating film. After this heating and drying step, the coating film was irradiated with ultraviolet rays to form the coating layer 5 having the average thickness of t₅ of 5.0 um on the upper surface and the lower surface of the resin layer 3, respectively, to obtain a laminate. At this time, in order to prevent generation of unevenness on a surface of the coating layer due to bumping of a propylene glycol monomethyl ether component in the curable resin composition during the heating and drying step, the propylene glycol monomethyl ether component was gradually volatilized at room temperature for 5 minutes before performing the heating and drying.

The laminate on which the coating layer 5 was formed was cut into a size of 300 mm in length × 200 mm in width to obtain the cover member 1 of Example 1 (see Table 2).

### (Examples 2 to 5)

The cover members 1 of Examples 2 to 5 were obtained in the same manner as in Example 1, except that the content of the ultraviolet absorber 2 in the curable resin composition for forming the coating layer was set as shown in Table 1.

### (Example 6)

The cover member 1 of Example 6 was obtained in the same manner as in Example 1, except that the curable resin composition containing the ultraviolet absorber 3 instead of the ultraviolet absorber 2 was used as the curable resin composition for forming the coating layer.

### (Example 7)

The cover member 1 of Example 7 was obtained in the same manner as in Example 1, except that the curable resin composition further including the light stabilizer 1 is used as the curable resin composition for forming the coating layer, and the contents of the ultraviolet absorber 2 and the light stabilizer 1 in the curable resin composition were set as shown in Table 1.

### (Example 8)

The cover member 1 of Example 8 was obtained in the same manner as in Example 1, except that the curable resin composition containing the urethane (meth)acrylate 2 instead of the urethane (meth)acrylate 1 was used as the curable resin composition for forming the coating layer.

### (Example 9)

The cover member 1 of Example 9 was obtained in the same manner as in Example 1, except that the resin layer 3 obtained without adding the ultraviolet absorber 1 was used.

### (Comparative Example 1)

The cover member 1 of Comparative Example 1 was obtained in the same manner as in Example 1, except that the curable resin composition obtained without adding the ultraviolet absorber 2 was used as the curable resin composition for forming the coating layer.

**[Table 1]**

| | | Example | | | | | | | | | Comparative Example |
|---|---|---|---|---|---|---|---|---|---|---|---|
| | | 1 | 2 | 3 | 4 | 5 | 6 | 7 | 8 | 9 | 1 |
| | Combination containing decafunctional urethane acrylate and hexafunctional acrylate monomer (UV-1700B) [parts bv weight] | 14.7003 | 14.7003 | 14.7003 | 14.7003 | 14.7003 | 14.7003 | 14.7003 | 14.7003 | 14.7003 | 14.7003 |
| | Bifunctional urethane acrylate (EB2000) [parts by weight] | 2.1000 | 2.1000 | 2.1000 | 2.1000 | 2.1000 | 2.1000 | 2.1000 | - | 2.1000 | 2.1000 |
| | Bifunctional urethane acrylate (GX-8644D) [parts bv weight] | - | - | - | - | - | - | - | 2.1000 | - | - |
| | Bifunctional acrylate (A-DCP) [parts by weight] | 4.2000 | 4.2000 | 4.2000 | 4.2000 | 4.2000 | 4.2000 | 4.2000 | 4.2000 | 4.2000 | 4.2000 |
| | Radical polymerization initiator (Omnirad184) [parts by weight] | 1.4700 | 1.4700 | 1.4700 | 1.4700 | 1.4700 | 1.4700 | 1.4700 | 1.4700 | 1.4700 | 1.4700 |
| Curable resin composition (coating layer 5) | Hydroxyphenyl benzotriazole-based ultraviolet absorber (RUVA-93) [parts by weight] | 0.5250 | 0.2100 | 0.3150 | 1.0500 | 2.1000 | - | 0.3150 | 0.5250 | 0.5250 | - |
| | Hydroxyphenyl triazine-based ultraviolet absorber (Tinuvin 400) [parts by weight] | - | - | - | - | - | 0.5250 | - | - | - | - |
| | Hindered amine-based light stabilizer (LA-82) [parts by weight] | - | - | - | - | - | - | 0.2100 | - | - | - |
| | Leveling agent (BYK-378) [parts bv weight] | 0.0032 | 0.0032 | 0.0032 | 0.0032 | 0.0032 | 0.0032 | 0.0032 | 0.0032 | 0.0032 | 0.0032 |
| | Propylene glycol monomethyl ether (PM) [parts by weight] | 77.0014 | 77.0014 | 77.0014 | 77.0014 | 77.0014 | 77.0014 | 77.0014 | 77.0014 | 77.0014 | 77.0014 |
| | Average thickness t₅ [µm] | 5.0 | 5.0 | 5.0 | 5.0 | 5.0 | 5.0 | 5.0 | 5.0 | 5.0 | 5.0 |

### 4. Evaluation

The cover member of each example and each comparative example was evaluated by the following methods.

### <Light resistance test>

The cover member 1 of each example and each comparative example was subjected to an acceleration test using a xenon weather meter, a color change (ΔE) after ultraviolet light irradiation for 600 hours based on Table 3-A method-Cycle No. 3 in JIS K 7350-2 was measured based on ISO11664-4, and the evaluation was performed as follows based on the obtained color change (ΔE).

### <<Color change (ΔE)>>

A: When ΔE is 3.0 or less, no change in appearance is observed.
B: ΔE is more than 3.0 and less than 5.0, and although some changes in appearance are observed, there is no effect on use as the cover member 1.
C: ΔE is 5.0 or more and less than 8.0, changes in appearance are observed, the effect is on use as the cover member 1.
D: ΔE is more than 8.0, changes in appearance is clearly observed, and it is difficult to use it as the cover member 1.

### <Adhesion test>

For the cover member 1 of each example and each comparative example, first, the acceleration test of performing the ultraviolet light irradiation for 600 hours using a xenon weather meter based on Table 3-A method-Cycle No. 3 in JIS K 7350-2 was performed. After that, the coating layer 5 of the cover member 1 was cut in a perpendicular grid-like (25 squares) cuts at intervals of 2 mm using a single blade based on the cross-cut method specified in JIS K 5600-5-6. Then, a tape with an adhesion strength of 10 ± 1 N per 25 mm width was bonded to the grid of 25 squares (the coating layer 5), and the tape was pulled off for 0.5 to 1.0 seconds at an angle close to 60° within 5 minutes after the adhesion. Next, the number of grids in which the coating layer 5 was peeled off along an edge of the cut and/or at an intersection was measured, and a proportion of the grids (the coating layer 5) adhered to the resin layer 3 was calculated. The evaluation was performed as follows based on the obtained proportion of the adhered grids.
A: The proportion of adhered grids is 100%.
B: The proportion of adhered grids is 90% or more and less than 100%.
C: The proportion of adhered grids is 50% or more and less than 90%.
D: The proportion of adhered grids is less than 50%.

Table 2 below shows evaluation results of the cover member of each example and each comparative example obtained as described above.

**[Table 2]**

| | | | Example | | | | | | | | | Comparative Example |
|---|---|---|---|---|---|---|---|---|---|---|---|---|
| | | | 1 | 2 | 3 | 4 | 5 | 6 | 7 | 8 | 9 | 1 |
| Coating layer 5 | Combination containing decafunctional urethane acrylate and hexafunctional acrylate monomer (UV-1700B) [% by weight] | | 63.9185 | 64.8061 | 64.5075 | 62.4920 | 59.8218 | 63.9185 | 63.9185 | 63.9185 | 63.9185 | 65.4117 |
| | Bifunctional urethane acrylate (EB2000) [parts by weight] | | 9.1310 | 9.2578 | 9.2152 | 8 . 9272 | 8.5458 | 9.1310 | 9.1310 | - | 9.1310 | 9.3443 |
| | Bifunctional urethane acrylate (GX-8644D) [% by weight] | | - | - | - | - | - | - | - | 9.1310 | - | - |
| | Bifunctional acrylate (A-DCP) [% by weight] | | 18.2621 | 18.5157 | 18.4303 | 17.8545 | 17.0916 | 18.2621 | 18.2621 | 18.2621 | 18.2621 | 18.6887 |
| | Radical polymerization initiator (Omnirad184) [% by weight] | | 6.3917 | 6.4805 | 6.4506 | 6.2491 | 5.9821 | 6.3917 | 6.3917 | 6.3917 | 6.3917 | 6.5410 |
| | Hydroxyphenyl benzotriazole-based ultraviolet absorber (RUVA-93) [% by weight] | | 2.2828 | 0.9258 | 1.3823 | 4.4636 | 8.5458 | - | 1.3697 | 2.2828 | 2.2828 | - |
| | Hydroxyphenyl triazine-based ultraviolet absorber (Tinuvin 400) [% by weight] | | - | - | - | - | - | 2.2828 | - | - | - | - |
| | Hindered amine-based light stabilizer (LA-82) [% by weight] | | - | - | - | - | - | - | 0.9131 | - | - | - |
| | Leveling agent (BYK-378) [% by weight] | | 0.0139 | 0.0141 | 0.0140 | 0.0136 | 0.0130 | 0.0139 | 0.0139 | 0.0139 | 0.0139 | 0.0142 |
| | Average thickness t₅ [µm] | | 5.0 | 5.0 | 5.0 | 5.0 | 5.0 | 5.0 | 5.0 | 5.0 | 5.0 | 5.0 |
| Resin layer 3 | Bisphenol A-type polycarbonate (E2000F-N) [parts by weight] | | 100.0 | 100.0 | 100.0 | 100.0 | 100.0 | 100.0 | 100.0 | 100.0 | 100.0 | 100.0 |
| | Hydroxyphenyl triazine-based ultraviolet absorber (Tinuvin 1577 ED) [parts by weight] | | 0.05 | 0.05 | 0.05 | 0.05 | 0.05 | 0.05 | 0.05 | 0.05 | - | 0.05 |
| | Blue coloring material (Solvent Violet 13) [parts by weight] | | 0.00018 | 0.00018 | 0.00018 | 0.00018 | 0.00018 | 0.00018 | 0.00018 | 0.00018 | 0.00018 | 0.00018 |
| | Red coloring material (Solvent Red 52) [parts by weight] | | 0.00004 | 0.00004 | 0.00004 | 0.00004 | 0.00004 | 0.00004 | 0.00004 | 0.00004 | 0.00004 | 0.00004 |
| | Average thickness t₃ [mm] | | 0.50 | 0.50 | 0.50 | 0.50 | 0.50 | 0.50 | 0.50 | 0.50 | 0.50 | 0.50 |
| Cover member 1 | Average thickness t₁ (t₃ + 2 ·t₅) [mm] | | 0.51 | 0.51 | 0.51 | 0.51 | 0.51 | 0.51 | 0.51 | 0.51 | 0.51 | 0.51 |
| Evaluation | Light resistance test | Color change (ΔE) | A | B | A | A | A | A | A | B | B | D |
| | Adhesion test | Proportion of adhered grids (%) | A | B | A | A | B | C | A | B | B | D |

As shown in Table 2, in the translucent resin sheet in each example, a magnitude of the color change after irradiation with the ultraviolet rays could be set to less than 5.0 [ΔE], and when the translucent resin sheet was used as the cover member, a result that can be said as the cover member having excellent light resistance was shown.

On the other hand, in the translucent resin sheet of the comparative examples, the magnitude of the color change after irradiation with the ultraviolet rays was set to 5.0 [ΔE] or more, and this translucent resin sheet could not be used as the cover member having excellent light resistance.

### Industrial Applicability

The translucent resin sheet of the present invention is used for the cover member installed to cover the window portion of the storage body which stores the light source which emits a light and includes the window portion, from which the light from the light source is emitted toward the outside. Therefore, the present invention has industrial applicability.

### Reference Signs List

1 Cover member
3 Resin layer
5 Coating layer
10 Head-up display
11 Display unit
12 Reflective member
13 Storage body
131 Window portion
100 Automobile
101 Dashboard
102 Windshield
102a Rear surface (inner surface)
H Driver
LS Display image
t₁ Total thickness
t₃, t₅ Average thickness

## Claims

1. A translucent resin sheet which is used as a cover member installed to cover a window portion of a storage body which stores a light source emitting light and includes the window portion through which the light from the light source is emitted toward an outside, the translucent resin sheet comprising:
a resin layer configured with a resin material as a main material; and
a coating layer laminated on at least one surface of the resin layer,
wherein the coating layer contains a curable resin as a main material, and an ultraviolet absorber, and
wherein a color change of the translucent resin sheet measured based on ISO11664-4 after irradiating the coating layer with ultraviolet rays for 600 hours using a xenon weather meter based on Table 3-A method-Cycle No. 3 in JIS K 7350-2 is less than 5.0 [ΔE].

2. The translucent resin sheet according to claim 1, wherein the curable resin is a (meth)acrylic resin.

3. The translucent resin sheet according to claim 1, wherein the ultraviolet absorber includes a functional group which is reactive with the curable resin.

4. The translucent resin sheet according to claim 1, wherein the resin material is a polycarbonate-based resin.

5. The translucent resin sheet according to claim 4, wherein the resin layer has a retardation, and the retardation is 500 nm or less.

6. The translucent resin sheet according to claim 1, wherein the resin layer further contains an ultraviolet absorber.

7. The translucent resin sheet according to claim 1, wherein the curable resin has no aromatic ring.

8. The translucent resin sheet according to claim 1, wherein, after irradiating the coating layer with ultraviolet rays for 600 hours using the xenon weather meter based on Table 3-A method-Cycle No. 3 in JIS K 7350-2, in the translucent resin sheet, an adhesion of the coating layer cut in a grid shape by a cross-cut method specified in JIS K 5600-5-6 with respect to the resin layer is 90% or more.

9. A projection type display comprising:
the translucent resin sheet according to any one of claims 1 to 8 as the cover member.

10. A moving body comprising:
the projection type display according to claim 9.
